# EUROPEAN PATENT SPECIFICATION

(11) **EP 2 658 206 B1**
(45) Date of publication and mention of the grant of the patent: **20.06.2018**
(21) Application number: 12739511.9
(22) Date of filing: 13.01.2012
(51) Int. Cl.: H04L 29/12

(54) **IP ADDRESS CONFIGURATION METHOD, DEVICE AND SYSTEM**
IP-ADRESSEN-KONFIGURATIONSVERFAHREN, -VORRICHTUNG UND -SYSTEM
PROCÉDÉ, DISPOSITIF ET SYSTÈME DE CONFIGURATION D'ADRESSE IP

(30) Priority: 28.01.2011 CN 201110032062
(43) Date of publication of application: 30.10.2013
(73) Proprietor: Huawei Technologies Co., Ltd., Longgang District Shenzhen, Guangdong 518129 (CN)
(72) Inventor: LIU, Bing, Shenzhen Guangdong 518129 (CN); JIANG, Sheng, Shenzhen Guangdong 518129 (CN)
(74) Representative: Thun, Clemens
(86) International application number: PCT/CN2012/070311
(87) International publication number: WO 2012/100685

(56) References cited:
- CN-A- 101 577 723
- CN-A- 101 674 288
- JIANG B LIU HUAWEI TECHNOLOGIES CO S ET AL: "IPv6 Site Renumbering Guidelines and Further Works; draft-jiang-ipv6-site-renum-guideline-00.t xt", IPV6 SITE RENUMBERING GUIDELINES AND FURTHER WORKS; DRAFT-JIANG-IPV6-SITE-RENUM-GUIDELINE-00.T XT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 26 January 2011 (2011-01-26), pages 1-13, XP015073683, [retrieved on 2011-01-26]
- BAKER CISCO SYSTEMS E LEAR CISCO SYSTEMS GMBH R DROMS CISCO SYSTEMS F: "Procedures for Renumbering an IPv6 Network without a Flag Day; rfc4192.txt", 20050901, 1 September 2005 (2005-09-01), XP015041824, ISSN: 0000-0003
- THOMSON CISCO T NARTEN IBM T JINMEI TOSHIBA S: "IPv6 Stateless Address Autoconfiguration; rfc4862.txt", 20070901, 1 September 2007 (2007-09-01), XP015052408, ISSN: 0000-0003

## Description

### FIELD OF THE INVENTION

The present invention relates to the field of data transmission technologies, and in particular, to a method, an apparatus and a system for configuring an IP address.

### BACKGROUND OF THE INVENTION

Network renumbering refers to reconfiguration of an IP address of a host in a network due to network reorganization, switching of an ISP (Internet Service Provider, internet service provider) and other reasons.

Renumbering in IPv6 (Internet Protocol Version 6, Internet Protocol version 6) is generally performed by switching an address prefix, namely, a network delivers a new address prefix and cancels a previously used address prefix. In the process of renumbering, three manners may be adopted to configure a new IP address for a host: adopting a DHCP (Dynamic Host Configuration Protocol, dynamic host configuration protocol) to perform stateful address configuration on the host; adopting an ND (Neighbor Discovery, neighbor discovery) protocol to perform stateless address configuration on the host; and manual configuration.

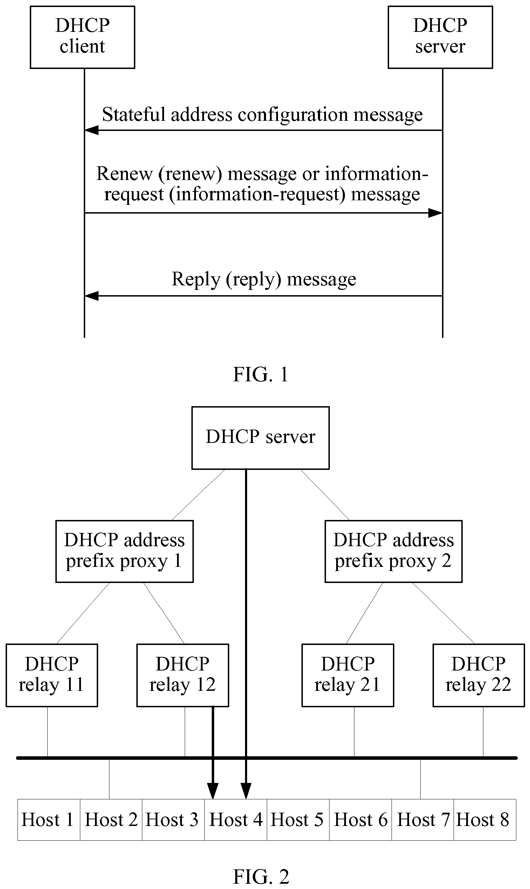

DHCPv6 is an IPv6 version of the DHCP, belonging to a stateful address auto-configuration protocol. In the process of stateful address configuration, a DHCP server may actively initiate a stateful address configuration message (a DHCP reconfiguration message) to a DHCP client to trigger reconfiguration; after receiving the DHCP reconfiguration message, the DHCP client selects, according to an instruction in the message, to send a renew (renew) message or an information-request (information-request) message to the DHCP server, so as to configure a new address. The configuration flow is shown in FIG. 1.

The ND protocol enables a node (a host and a router) to discover data link layer addresses of other neighbors on the current link, and uses five types of ICMPv6 (Internet Control Message Protocol Version 6, Internet Control Message Protocol version 6) data packets for work, including: router advertisement (RA, Router Advertisement), router solicit (RS, Router Solicit), neighbor solicit (NS, Neighbor Solicit), neighbor advertisement (NA, Neighbor Advertisement) and redirect (redirect).

After receiving an RS message periodically, the router uses an RA message to notify the host on the link of its existence, in which the RA message carries information such as a prefix used to perform address auto-configuration. In the process of renumbering, the router may use the RA message of the ND protocol to notify the host on the link of a new address prefix. After receiving the address prefix, the host may perform stateless address auto-configuration.

Usually, a network may be deployed with the DHCPv6 and ND protocols at the same time. In the network shown in FIG. 2, after triggering reconfiguration, the DHCP server may directly notify a host 4 of an address prefix through a DHCP reconfiguration message; the DHCP server may also allocate an address prefix to a DHCP address prefix proxy first, then the DHCP address prefix proxy allocates an address prefix to a DHCP relay, and the DHCP relay 12 notifies the host 4 of the address prefix through an RA message of the ND protocol subsequently. Therefore, the host 4 may receive address configuration messages of two different protocol types, namely, DHCPv6 and ND, at the same time or at different time.

In the process of implementing the network renumbering in the network deployed with the DHCPv6 and ND protocols at the same time, it is found that the prior art has at least the following problem. The ND protocol explicitly stipulates the practice of the host configured with ND when the host receives the RA message and is notified of the new address prefix, and the DHCP protocol also explicitly stipulates the practice of the host configured with DHCP when the host receives the DHCP reconfiguration message and is notified of the new address prefix. However, for the processing method in a case that a conflict between address configuration policies of the host occurs, namely, for the processing method in a case that the host configured with DHCP receives the RA message or the host configured with ND receives the DHCP reconfiguration message, there is no explicit definition on the level of standards.

At present, the processing method for the foregoing conflict is: performing processing according to a local policy configured by the operating system/protocol stack related programs of the host. Taking the host configured with DHCP receiving the RA message as an example, the local policy configured by the host is as follows.
1. According to the new address prefix of the RA message, abandon the DHCP configuration, and use the stateless address configuration.
2. If the host configured with DHCP also receives the DHCP reconfiguration message, perform reconfiguration negotiation with the DHCP server according to the new address prefix of the DHCP reconfiguration message.
3. Ignore the RA message, and if no DHCP reconfiguration message is received, still use the old address.

All the foregoing three cases of the local policy may cause an adverse impact on the network. For the first case, abandoning the DHCP configuration and using the stateless address configuration may violate the network policy of the DHCP server for unified management on the host, and easily cause management confusion. For the second case in which the new address prefix of the DHCP reconfiguration message is received, if the new address prefix delivered by the DHCP server is different from the new address prefix notified through the RA message due to factors such as a management mistake, the host cannot perform routing after an address is configured for the host according to the DHCP. For the third case, the host continues to use the old address, so that the network renumbering operation of the host fails.

Similarly, when the host configured with ND receives the DHCP reconfiguration message, adopting a local policy similar to the foregoing local policy may also cause an adverse impact on the network.

S. Jiang and B. Liu: "IPv6 Site Renumbering Guidelines and Further Works; draft-jiang-ipv6-site-renum-guideline-00.txt" analyzes the existing issues for IPv6 site renumbering. It also analyzes the possible directions to solve these issues and gives recommendations. F. Baker ET AL: "Procedures for Renumbering an IPv6 Network without a Flag Day; RFC4192" describes a procedure that can be used to renumber a network from one prefix to another.

Therefore, in the process of network renumbering, when a conflict occurs between address configuration policies of the host, adopting the local policy of the host may cause an adverse impact on the network.

### SUMMARY OF THE INVENTION

Embodiments of the present invention provide a method, an apparatus and a system for configuring an IP address, which can prevent an adverse impact on a network caused by a conflict between address configuration policies of a host in the process of network renumbering.

To achieve the foregoing objectives, the embodiments of the present invention adopt the following technical solutions.

A method for configuring an IP address includes: receiving, by a terminal, an address configuration message; when an address configuration policy conflict occurs, reporting, by the terminal, address configuration policy conflict information to a network side; and receiving, by the terminal, an address configuration instruction delivered by the network side;
wherein the reporting the address configuration policy conflict information to the network side comprises:
reporting the address configuration policy conflict information to a DHCP server through a DHCP message;
wherein the address configuration policy conflict information is comprised in an address configuration conflict option (OPTION_IA_ReconfigConflict) of the DHCP message, and the address configuration conflict option is used to transfer address configuration policy conflict information of a host.

A method for configuring an IP address includes: receiving, by a network side, address configuration policy conflict information reported by a terminal, wherein the address configuration policy conflict information is comprised in an address configuration conflict option (OPTION_IA_ReconfigConflict) of a DHCP message; and according to the address configuration policy conflict information, delivering, by the network side, an address configuration instruction to the terminal, or reporting, by the network side, information about an error to a network management system.

An apparatus for configuring an IP address includes: a message receiving module, configured to receive an address configuration message; a conflict reporting module, configured to, when an address configuration policy conflict occurs, report address configuration policy conflict information to a network side, wherein the address configuration policy conflict information is comprised in an address configuration conflict option (OPTION_IA_ReconfigConflict) of a DHCP message; and an instruction receiving module, configured to receive an address configuration instruction delivered by the network side.

An apparatus for configuring an IP address includes: a conflict receiving module, configured to receive address configuration policy conflict information reported by a terminal, wherein the address configuration policy conflict information is comprised in an address configuration conflict option (OPTION_IA_ReconfigConflict) of a DHCP message; a first sending module, configured to, according to the address configuration policy conflict information, deliver an address configuration instruction to the terminal, or report information about an error to a network management system.

A system for configuring an IP address includes: a terminal and a network side, in which the terminal is configured to, when an address configuration policy conflict occurs, report address configuration policy conflict information to the network side, wherein the address configuration policy conflict information is comprised in an address configuration conflict option (OPTION_IA_ReconfigConflict) of a DHCP message; and the network side is configured to, according to the address configuration policy conflict information, deliver an address configuration instruction to the terminal, or report information about an error to a network management system.

In the method, the apparatus and the system for configuring an IP address provided by the
embodiments of the present invention, when an address configuration policy conflict occurs, a terminal reports address configuration policy conflict information to a network side, so that the address configuration policy conflict in the terminal is no longer processed by a local policy of the terminal, but processed by the network side, that is, the network side decides what address configuration policy is adopted for the terminal. Therefore, an optimal solution can be provided for the conflict according to the actual situation of a network, thereby preventing an adverse impact on the network caused by the conflict.

### BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other drawings from these accompanying drawings without creative efforts.
FIG. 1 is a flow chart of performing stateful address configuration for a host configured with DHCP in the prior art;
FIG. 2 is a schematic diagram of performing network renumbering in a network deployed with DHCPv6 and ND protocols at the same time in the prior art;
FIG. 3 is a flow chart of a method for configuring an IP address according to Embodiment 1 of the present invention;
FIG. 4 is a block diagram of an apparatus for configuring an IP address according to Embodiment 1 of the present invention;
FIG. 5 is a flow chart of a method for configuring an IP address according to Embodiment 2 of the present invention;
FIG. 6 is a block diagram of an apparatus for configuring an IP address according to Embodiment 2 of the present invention;
FIG. 7 is a flow chart of a method for configuring an IP address according to Embodiment 3 of the present invention;
FIG. 8 is a flow chart of another method for configuring an IP address according to Embodiment 3 of the present invention;
FIG. 9 is a flow chart of still another method for configuring an IP address according to Embodiment 3 of the present invention;
FIG. 10 is a block diagram of an apparatus for configuring an IP address according to Embodiment 4 of the present invention; and
FIG. 11 is a block diagram of a system for configuring an IP address according to Embodiment 5 of the present invention.

### DETAILED DESCRIPTION OF THE EMBODIMENTS

The following clearly and completely describes the technical solutions according to the present invention with reference to the accompanying drawings. In the following description the disclosed embodiments have to be understood as examples. The embodiments of the invention are solely defined by the appended claims.

### Embodiment 1

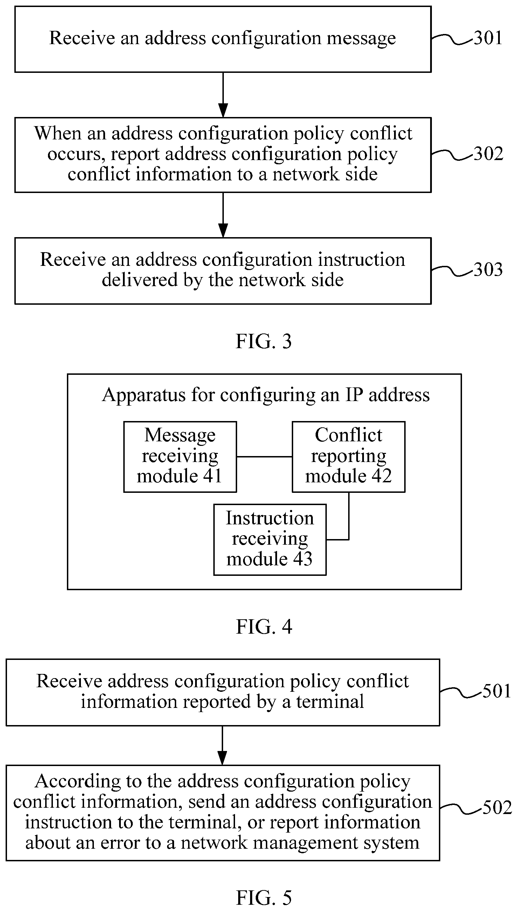

As shown in FIG. 3, a method for configuring an IP address includes the following steps.

301: Receive an address configuration message.

Specifically, when an IP address of a terminal in a network needs to be reconfigured, the terminal may receive address configuration messages sent by other nodes in the network. It is assumed that the terminal is a host configured with DHCP, and other nodes in the network include, but are not limited to, a DHCP server and a DHCP relay, the host may receive a stateful address configuration message sent by the DHCP server and/or a stateless address configuration message sent by the DHCP relay.

When the host configured with DHCP receives the stateless address configuration message from the DHCP relay, namely, an RA message, an address configuration policy conflict occurs in the host configured with DHCP.

302: When an address configuration policy conflict occurs, report address configuration policy conflict information to a network side.

Specifically, when an address configuration policy conflict occurs in the terminal, the terminal generates address configuration policy conflict information, and then reports the information to the network side. The network side may include, but not limited to, a DHCP server.

303: Receive an address configuration instruction delivered by the network side.

Specifically, when receiving the address configuration policy conflict information, the network side, for example, the DHCP server, generates an address configuration instruction according to the information, and then delivers the instruction to the terminal. Upon receiving the address configuration instruction, the terminal may complete modification of an IP address prefix according to a requirement of the instruction.

The execution subject of the foregoing steps may be a terminal, a host configured with DHCP, or another device that needs to be renumbered in a network.

In the method for configuring an IP address provided by the embodiment of the present invention, when an address configuration policy conflict occurs, a terminal reports address configuration policy conflict information to a network side, so that the address configuration policy conflict in the terminal is no longer processed by a local policy of the terminal, but processed by the network side, that is, the network side decides what address configuration policy is adopted for the terminal. Therefore, an optimal solution can be provided for the conflict according to the actual situation of a network, thereby preventing an adverse impact on the network caused by the conflict.

This embodiment further provides an apparatus for configuring an IP address. As shown in FIG. 4, the apparatus includes: a message receiving module 41, configured to receive an address configuration message; a conflict reporting module 42, configured to, when an address configuration policy conflict occurs, report address configuration policy conflict information to a network side; and an instruction receiving module 43, configured to receive an address configuration instruction delivered by the network side.

The method executed by the foregoing modules has been described in detail above, and details are not described herein again.

In the apparatus for configuring an IP address provided by this embodiment, through a conflict reporting module, when an address configuration policy conflict occurs, a terminal reports address configuration policy conflict information to a network side, so that the address configuration policy conflict in the terminal is no longer processed by a local policy of the terminal, but processed by the network side, that is, the network side decides what address configuration policy is adopted for the terminal. Therefore, an optimal solution can be provided for the conflict according to the actual situation of a network, thereby preventing an adverse impact on the network caused by the conflict.

### Embodiment 2

As shown in FIG. 5, another method for configuring an IP address includes the following steps.

501: Receive address configuration policy conflict information reported by a terminal.

Specifically, when an IP address of a terminal in a network needs to be reconfigured, an address configuration policy conflict may occur in the terminal. When the conflict occurs, the terminal may report address configuration policy conflict information to a network side.

502: According to the address configuration policy conflict information, send an address configuration instruction to the terminal, or report information about an error to a network management system.

Specifically, the network side may generate an address configuration instruction according to the address configuration policy conflict information reported by the terminal, and then deliver the instruction to the terminal. Upon receiving the address configuration instruction, the terminal may complete modification of an IP address prefix according to a requirement of the instruction.

Besides, when some special cases occur, for example, new address prefixes included in address configuration messages of different protocol types are different, which is caused by an error in a network, at this time, the network side may also report information about an error to the network management system according to the address configuration policy conflict information reported by the terminal. After receiving the information, the network management system may take a corresponding measure to correct the error in the network, and performs correct address configuration on the terminal. Specifically, the error in the network may be corrected by a network manager manually and correct address configuration may be performed by the network manager manually.

The execution subject of the foregoing steps may be a network side, a DHCP server, or another device capable of sending a renumbering command in a network.

In the method for configuring an IP address provided by the embodiment of the present invention, when an address configuration policy conflict occurs in a terminal, a server generates an address configuration instruction or reports information about an error according to address configuration policy conflict information reported by the terminal, so that the address configuration policy conflict in the terminal is no longer processed by a local policy of the terminal, but processed by the server or a network management system. The server can decide what address configuration policy is adopted for the terminal, so as to provide an optimal solution for the conflict according to the actual situation of a network, and therefore, an adverse impact on the network caused by the conflict can be prevented.

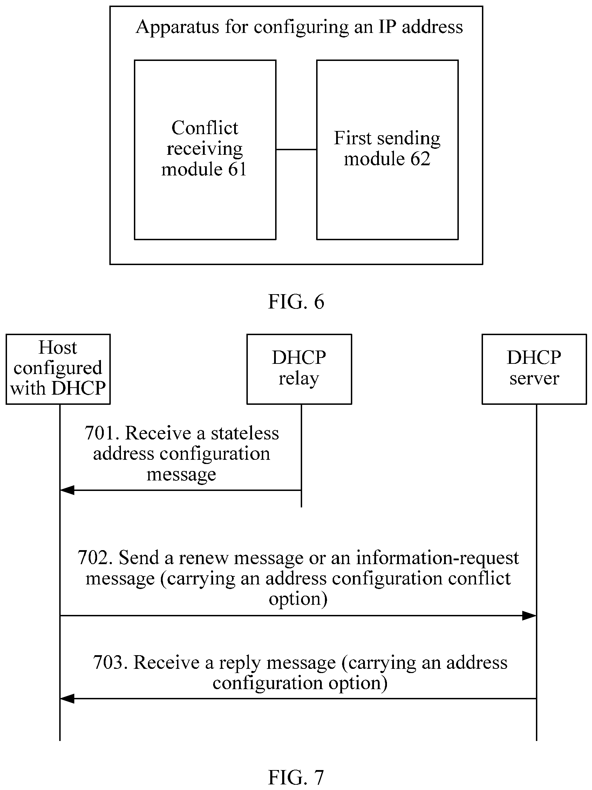

This embodiment further provides an apparatus for configuring an IP address. As shown in FIG. 6, the apparatus includes: a conflict receiving module 61, configured to receive address configuration policy conflict information reported by a terminal; and a first sending module 62, configured to, according to the address configuration policy conflict information, send an address configuration instruction to the terminal, or report information about an error to a network management system.

The method executed by the foregoing modules has been illustrated in detail above, and details are not described herein again.

In the apparatus for configuring an IP address provided by this embodiment, through a first sending module, when an address configuration policy conflict occurs in a terminal, a server generates an address configuration instruction or reports information about an error according to address configuration policy conflict information reported by the terminal, so that the address configuration policy conflict in the terminal is no longer processed by a local policy of the terminal, but processed by the server or a network management system. The server can decide what address configuration policy is adopted for the terminal, so as to provide an optimal solution for the conflict according to the actual situation of a network, and therefore, an adverse impact on the network caused by the conflict can be prevented.

### Embodiment 3

Taking a network including a host configured with DHCP, a DHCP relay and a DHCP server as an example, methods for configuring an IP address in three cases are illustrated in detail below with reference to FIG. 7 to FIG. 9, respectively.

FIG. 7 shows a method for configuring an IP address, and a host configured with DHCP, a DHCP relay (for example, a CPE: Customer Premise Equipment, customer premise equipment) and a DHCP server are disposed in FIG. 7. The method includes the following steps.

701: The host configured with DHCP receives a stateless address configuration message sent by the CPE, namely, an RA message.

At this time, an address configuration policy conflict may occur in the host configured with DHCP and served as the recipient of the RA message.

702: The host configured with DHCP sends a renew (renew) message or an information-request (information-request) message to report address configuration policy conflict information to the DHCP server.

The address configuration policy conflict information is included in an address configuration conflict option of the renew message or the information-request message. The address configuration conflict option is a new option defined in the request message, and the option is used to transfer address configuration policy conflict information of a host. The newly defined option is named as OPTION_IA_ReconfigConflict, and the format thereof is shown in the following table:

| OPTION_IA_ReconfigConflict | option-len |
|---|---|
| IAID | |
| IA_ReconfigConflict-options | |

In the table, the option-len indicates the length of the address configuration policy conflict information in the option, occupying a storage space of two 8-bit bytes, the IAID indicates an identifier of the option, occupying a storage space of four 8-bit bytes, and the IA_ ReconfigConflict-options indicates the content of the address configuration policy conflict information, occupying a storage space of option-len * four 8-bit bytes.

The address configuration policy conflict information in the IA_ ReconfigConflict-options may include, as required, the content that indicates the address configuration policy conflict, which may include a conflict type or conflict content, and may also include a conflict type and conflict content. The address configuration policy conflict information reported by the host shown in FIG. 7 may include a new address prefix delivered by the RA message.

703: The host configured with DHCP receives an address configuration instruction delivered by the DHCP server.

Specifically, the DHCP server delivers the address configuration instruction to the host through a reply (reply) message, in which the instruction is included in an address configuration option of the reply message. The option is a new option defined in the reply message, and the option is used to transfer host address configuration policy information of the DHCP server so as to instruct the host to perform address configuration in a specified manner.

A format of the address configuration option may be set as required, and the content of the address configuration instruction may also include different content according to a requirement of a network.

In the case shown in FIG. 7, the address configuration instruction may include content used to instruct the host to perform stateless address configuration according to the RA message, or include a new address allocated directly to the host, so that the DHCP server performs direct address configuration on the host.

For the case shown in FIG. 7, namely, when the host configured with DHCP receives only one stateless address configuration message, the DHCP server instructs address configuration of the host, thereby preventing a problem that a unified network policy may be violated when the host adopts a local policy to select stateless address configuration. The problem that, when the host adopts the local policy to select stateful address configuration, because the DHCP reconfiguration message is not received, the host may continue to use an old address and the renumbering of the host fails, can also be prevented.

It should be noted that, the method for reporting the address configuration policy conflict information is not limited to including the address configuration policy conflict information in the address configuration policy conflict option of the renew message or the information-request message, and the method may also be setting the address configuration policy conflict information in a new DHCP message, or setting the address configuration policy conflict information in an address configuration conflict option of a new DHCP message, or may be another method known by persons skilled in the art.

Similarly, the method for delivering the address configuration instruction is also not limited to including the address configuration instruction in the address configuration option of the reply message, and the method may also be setting the address configuration instruction in a new DHCP message, or setting the address configuration instruction in an address configuration option of a new DHCP message, or may be another method known by persons skilled in the art.

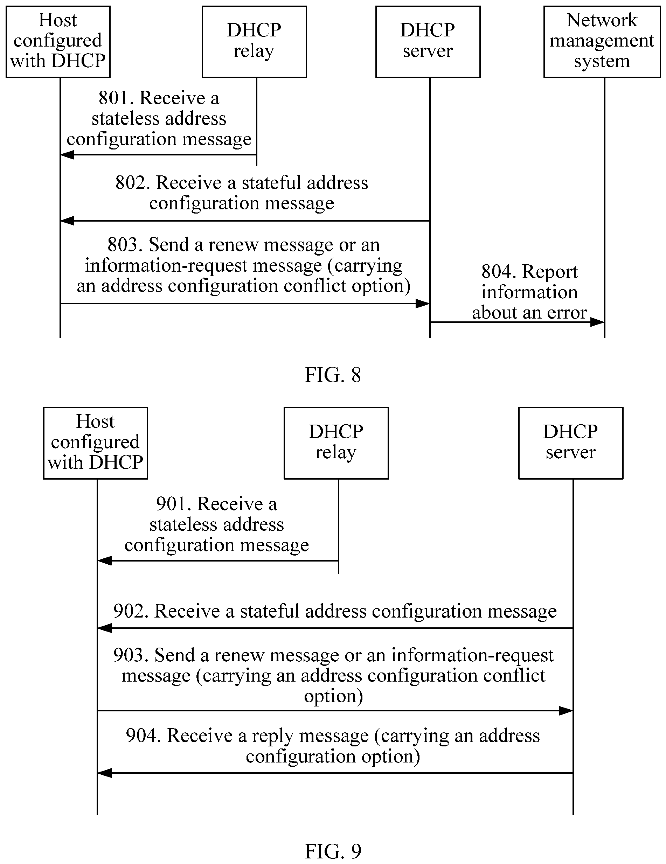

FIG. 8 shows another method for configuring an IP address. The method includes the following steps.

801: A host configured with DHCP receives a stateless address configuration message sent by a CPE, namely, an RA message.

At this time, an address configuration policy conflict may occur in the host configured with DHCP and served as the recipient of the RA message.

802: The host configured with DHCP receives a stateful address configuration message sent by a DHCP server, namely, a DHCP reconfiguration message.

803: The host configured with DHCP sends a renew (renew) message or an information-request (information-request) message to report address configuration policy conflict information to the DHCP server.

For the method for setting the address configuration policy conflict information, reference may be made to the setting method in FIG. 7. In the case shown in FIG. 8, because the host receives the address configuration messages of two protocol types, a case that new address prefixes carried in the two messages are inconsistent may occur, and the case belongs to a serious error. At this time, the content of the address configuration policy conflict information may include, but not limited to, a prefix conflict error identifier.

804: The DHCP server reports information about an error to a network management system.

When the DHCP server detects that the address configuration policy conflict information reported by the host includes the prefix conflict error identifier, the DHCP server reports information about an error to the network management system, and the network management system takes a corresponding measure to correct an error in a network, and implements a measure, such as performing correct address configuration on the host.

For the case shown in FIG. 8, namely, when the host configured with DHCP receives both a stateless address configuration message and a stateful address configuration message, through the corresponding operation of the DHCP server, a problem that the host may be possibly unable to perform routing when the host adopts a local policy is prevented.

FIG. 9 shows still another method for configuring an IP address. The method includes the following steps.

901: A host configured with DHCP receives a stateless address configuration message sent by a CPE, namely, an RA message.

At this time, an address configuration policy conflict may occur in the host configured with DHCP and served as the recipient of the RA message.

902: The host configured with DHCP receives a stateful address configuration message sent by a DHCP server, namely, a DHCP reconfiguration message.

903: The host configured with DHCP sends a renew (renew) message or an information-request (information-request) message to report address configuration policy conflict information to the DHCP server.

For the method for setting the address configuration policy conflict information, reference may be made to the setting method in FIG. 7. The case shown in FIG. 9 is a complementary case of the case shown in FIG. 8, namely, the case that new address prefixes carried in the address configuration messages of two protocol types received by the host are consistent. In this case, the content of the address configuration policy conflict information may include new address prefixes delivered by the two messages.

904: The host configured with DHCP receives an address configuration instruction delivered by the DHCP server.

Specifically, the DHCP server may deliver the address configuration instruction to the host through a reply message, in which the instruction may be included in an address configuration option of the reply message, and the address configuration instruction may also be set in a new DHCP message. The address configuration instruction may instruct the host to perform address configuration in a specified manner.

The address configuration instruction may include content used to instruct the host to perform stateless address configuration according to the RA message, or content used to instruct the host to perform stateful address configuration according to the DHCP reconfiguration message, so that the DHCP server instructs the host to select a suitable address configuration manner.

For the case shown in FIG. 9, namely, when the host configured with DHCP receives both a stateless address configuration message and a stateful address configuration message, the DHCP server instructs address configuration of the host, thereby preventing a problem that a unified network policy may be violated when the host adopts a local policy to select stateless address configuration.

It can be learned through the foregoing detailed illustration of the methods for configuring an IP address in three cases that, in the method for configuring an IP address provided by this embodiment, when an address configuration policy conflict occurs in a host, a server generates an address configuration instruction or reports information about an error according to address configuration policy conflict information reported by the host, so that the address configuration policy conflict in the host is no longer processed by a local policy of the host, but processed by the server or a network management system. The server can decide what address configuration policy is adopted for the host, so as to provide an optimal solution for the conflict according to the actual situation of a network, and therefore, an adverse impact on the network caused by the conflict can be prevented.

### Embodiment 4

This embodiment provides an apparatus for configuring an IP address. The apparatus includes: a message receiving module, configured to receive an address configuration message; a conflict reporting module, configured to, when an address configuration policy conflict occurs, report address configuration policy conflict information to a network side; and an instruction receiving module, configured to receive an address configuration instruction delivered by the network side.

The conflict reporting module reports the address configuration policy conflict information to the network side in the following manner: the conflict reporting module reports the address configuration policy conflict information to a DHCP server through a DHCP message. The address configuration policy conflict information may be included in an address configuration conflict option (OPTION_IA_ReconfigConflict) of the DHCP message, in which the address configuration conflict option is used to transfer address configuration policy conflict information of a host.

The apparatus for configuring an IP address may be a terminal, a host configured with DHCP, or another device that needs to be renumbered in a network.

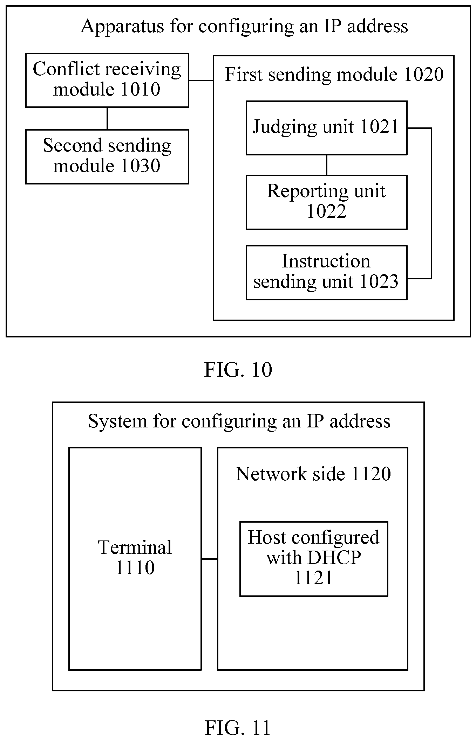

This embodiment further provides an apparatus for configuring an IP address. As shown in FIG. 10, the apparatus includes: a conflict receiving module 1010, configured to receive address configuration policy conflict information reported by a terminal; and a first sending module 1020, configured to, according to the address configuration policy conflict information, deliver an address configuration instruction to the terminal, or report information about an error to a network management system.

The apparatus may further include a second sending module 1030, configured to send an address configuration message to the terminal.

The first sending module includes: a determining unit 1021, configured to determine whether the address configuration policy conflict information includes a prefix conflict error identifier; a reporting unit 1022, configured to, when the determining unit 1021 determines that the address configuration policy conflict information includes the prefix conflict error identifier, report serious conflict information to the network management system according to the address configuration policy conflict information; and an instruction sending unit 1023, configured to, when the determining unit 1021 determines that the address configuration policy conflict information does not include the prefix conflict error identifier, send the address configuration instruction to the terminal.

Besides, the first sending module may send the address configuration instruction to the terminal in the following manner: the first sending module sends the address configuration instruction to the terminal through a DHCP message.

The address configuration instruction may be included in an address configuration option of the DHCP message, in which the address configuration option is used to transfer address configuration policy information of a host.

The apparatus for configuring an IP address may be a network side, a DHCP server, or another device capable of sending a renumbering command in a network.

The method executed by the foregoing modules has been illustrated in detail in Embodiment 3, and details are not described herein again.

In the apparatus for configuring an IP address provided by this embodiment, through a first sending module, when an address configuration policy conflict occurs in a terminal, a server generates an address configuration instruction or reports information about an error according to address configuration policy conflict information reported by the terminal, so that the address configuration policy conflict in the terminal is no longer processed by a local policy of the terminal, but processed by the server or a network management system. The server can decide what address configuration policy is adopted for the terminal, so as to provide an optimal solution for the conflict according to the actual situation of a network, and therefore, an adverse impact on the network caused by the conflict can be prevented.

### Embodiment 5

This embodiment provides a system for configuring an IP address. As shown in FIG. 11, the system includes: a terminal 1110 and a network side 1120, in which the terminal 1110 is configured to, when an address configuration policy conflict occurs, report address configuration policy conflict information to the network side 1120; and the network side 1120 is configured to, according to the address configuration policy conflict information, deliver an address configuration instruction to the terminal 1110, or report information about an error to a network management system.

The network side 1120 may include a DHCP server 1121, and the terminal 1110 is further configured to, when the address configuration policy conflict occurs, report the address configuration policy conflict information to the DHCP server 1121 through a DHCP message.

The address configuration policy conflict information may be included in an address configuration conflict option (OPTION_IA_ReconfigConflict) of the DHCP message, in which the address configuration conflict option is used to transfer address configuration policy conflict information of a host.

The DHCP server 1121 may be configured to, when the address configuration policy conflict information includes a prefix conflict error identifier, report the information about the error to the network management system according to the address configuration policy conflict information.

The DHCP server 1121 may also be configured to, when the address configuration policy conflict information does not include a prefix conflict error identifier, send the address configuration instruction to the terminal 1110 through a DHCP message according to the address configuration policy conflict information.

The address configuration instruction may be included in an address configuration option of the DHCP message, in which the address configuration option is used to transfer address configuration policy information of the host.

The method executed by the foregoing modules has been illustrated in detail in Embodiment 3, and details are not described herein again.

In the system for configuring an IP address provided by this embodiment, when an address configuration policy conflict occurs, a terminal reports address configuration policy conflict information to a network side, so that the address configuration policy conflict in the terminal is no longer processed by a local policy of the terminal, but processed by the network side, that is, the network side decides what address configuration policy is adopted for the terminal. Therefore, an optimal solution can be provided for the conflict according to the actual situation of a network, thereby preventing an adverse impact on the network caused by the conflict.

It should be noted that, the terminal is not limited to the host configured with DHCP described in each of the foregoing embodiments, and the address configuration policy conflict is also not limited to an address configuration policy conflict generated when the host configured with DHCP receives an RA message. For a host configured with ND, a conflict may also occur when the host configured with ND receives a DHCP reconfiguration message. In any network device that needs to be renumbered, as long as a protocol type of a received address configuration message is different from a protocol type configured by the device itself, namely, a conflict occurs and causes an adverse impact on a network, the conflict may be solved by using an embodiment of the present invention.

Through the above description of the embodiments, persons skilled in the art can clearly understand that the present invention may be accomplished by software plus necessary universal hardware, and of course, may also be accomplished by hardware, but in many cases, the former implementation manner is preferred. Based on such understanding, the technical solutions of the present invention essentially, or the part contributing to the prior art may be embodied in a form of a software product. The computer software product is stored in a readable storage medium, for example, a floppy disk, hard disk, or optical disk of a computer, and includes several instructions for instructing a computer device (which may be a personal computer, a server, a network device, or the like) to execute the method described in each of the embodiments of the present invention.

The embodiments of the present invention may be applied in a network deployed with multiple address configuration protocols.

The foregoing description is merely about exemplary embodiments of the present invention, but not intended to limit the protection scope of the present invention. Therefore, the protection scope of the present invention shall be subject to the appended claims.

## Claims

1. A method for configuring an IP address, comprising:
receiving (301), by a terminal, an address configuration message;
when an address configuration policy conflict occurs, reporting (302), by the terminal, address configuration policy conflict information to a network side; and
receiving (303), by the terminal, an address configuration instruction delivered by the network side;
wherein the reporting the address configuration policy conflict information to the network side comprises:
reporting the address configuration policy conflict information to a DHCP server through a DHCP message;
wherein the address configuration policy conflict information is comprised in an address configuration conflict option, OPTION_IA_ReconfigConflict, of the DHCP message, and the address configuration conflict option is used to transfer address configuration policy conflict information of a host.

2. The method for configuring an IP address according to claim 1, wherein the DHCP message is a renew message or an information-request message.

3. The method for configuring an IP address according to any one of claims 1 to 2, wherein the address configuration policy conflict information comprises a conflict type and/or conflict content.

4. A method for configuring an IP address, comprising:
receiving (501), by a network side, address configuration policy conflict information reported by a terminal, wherein the address configuration policy conflict information is comprised in an address configuration conflict option, OPTION_IA_ReconfigConflict, of a DHCP message; and
according to the address configuration policy conflict information, delivering (502), by the network side, an address configuration instruction to the terminal, or reporting (502), by the network side, information about an error to a network management system.

5. The method for configuring an IP address according to claim 4, wherein before the receiving the address configuration policy conflict information reported by the terminal, the method further comprises sending an address configuration message to the terminal; and
reporting the information about the error to the network management system according to the address configuration policy conflict information, when the address configuration policy conflict information comprises a prefix conflict error identifier.

6. The method for configuring an IP address according to claim 4, wherein when the address configuration policy conflict information does not comprise a prefix conflict error identifier, the address configuration instruction is sent to the terminal according to the address configuration policy conflict information.

7. The method for configuring an IP address according to claim 4, wherein the sending the address configuration instruction to the terminal according to the address configuration policy conflict information comprises:
sending the address configuration instruction to the terminal through a DHCP message.

8. The method for configuring an IP address according to claim 4, wherein the address configuration instruction comprises: selecting stateless address configuration, or selecting stateful address configuration, or directly allocating a new address.

9. An apparatus for configuring an IP address, comprising:
a message receiving module (41), configured to receive an address configuration message;
a conflict reporting module (42), configured to, when an address configuration policy conflict occurs, report address configuration policy conflict information to a network side, wherein the address configuration policy conflict information is comprised in an address configuration conflict option, OPTION_IA_ReconfigConflict, of a DHCP message; and
an instruction receiving module (43), configured to receive an address configuration instruction delivered by the network side.

10. An apparatus for configuring an IP address, comprising:
a conflict receiving module (61, 1010), configured to receive address configuration policy conflict information reported by a terminal, wherein the address configuration policy conflict information is comprised in an address configuration conflict option, OPTION_IA_ReconfigConflict, of a DHCP message; and
a first sending module (62, 1020), configured to, according to the address configuration policy conflict information, deliver an address configuration instruction to the terminal, or report information about an error to a network management system.

11. The apparatus for configuring an IP address according to claim 10, further comprising:
a second sending module (1030), configured to send an address configuration message to the terminal, wherein
the first sending module comprises:
a determining unit (1021), configured to determine whether the address configuration policy conflict information comprises a prefix conflict error identifier;
a reporting unit (1022), configured to, when the determining unit determines that the address configuration policy conflict information comprises the prefix conflict error identifier, report serious conflict information to the network management system according to the address configuration policy conflict information; and
an instruction sending unit (1023), configured to, when the determining unit determines that the address configuration policy conflict information does not comprise the prefix conflict error identifier, send the address configuration instruction to the terminal.

12. A system for configuring an IP address, comprising a terminal (1110) and a network side (1120), wherein
the terminal is configured to, when an address configuration policy conflict occurs, report address configuration policy conflict information to the network side, wherein the address configuration policy conflict information is comprised in an address configuration conflict option, OPTION_IA_ReconfigConflict, of a DHCP message; and
the network side is configured to, according to the address configuration policy conflict information, deliver an address configuration instruction to the terminal, or report information about an error to a network management system.

## Patentansprüche

1. Verfahren zum Konfigurieren einer IP-Adresse, das Folgendes umfasst:
Empfangen (301) durch ein Endgerät einer Adressenkonfigurationsnachricht;
dann, wenn ein Adressenkonfigurations-Strategiekonflikt auftritt, Berichten (302) durch das Endgerät von Adressenkonfigurations-Strategiekonfliktinformationen an eine Netzseite; und
Empfangen (303) durch das Endgerät eines Adressenkonfigurationsbefehls, der von der Netzseite geliefert wird;
wobei das Berichten der Adressenkonfigurations-Strategiekonfliktinformationen zu der Netzseite Folgendes umfasst:
Berichten der Adressenkonfigurations-Strategiekonfliktinformationen an einen DHCP-Server über eine DHCP-Nachricht;
wobei die Adressenkonfigurations-Strategiekonfliktinformationen in einer Adressenkonfigurationskonflikt-Option, OPTION_IA_ReconfigConflict, der DHCP-Nachricht enthalten sind und die Adressenkonfigurationskonflikt-Option verwendet wird, um Adressenkonfigurations-Strategiekonfliktinformationen eines Host zu übertragen.

2. Verfahren zum Konfigurieren einer IP-Adresse nach Anspruch 1, wobei die DHCP-Nachricht eine Erneuerungsnachricht oder eine Informationsanforderungsnachricht ist.

3. Verfahren zum Konfigurieren einer IP-Adresse nach einem der Ansprüche 1 bis 2, wobei die Adressenkonfigurations-Strategiekonfliktinformationen einen Konflikttyp und/oder einen Konfliktinhalt enthalten.

4. Verfahren zum Konfigurieren einer IP-Adresse, das Folgendes umfasst:
Empfangen (501) durch eine Netzseite von Adressenkonfigurations-Strategiekonfliktinformationen, die durch ein Endgerät berichtet werden, wobei die Adressenkonfigurations-Strategiekonfliktinformationen in einer Adressenkonfigurationskonflikt-Option, OPTION_IA_ReconfigConflict, einer DHCP-Nachricht enthalten sind; und
in Übereinstimmung mit den Adressenkonfigurations-Strategiekonfliktinformationen Liefern (502) durch die Netzseite eines Adressenkonfigurationsbefehls zu dem Endgerät oder Berichten (502) durch die Netzseite von Informationen bezüglich eines Fehlers an ein Netzmanagementsystem.

5. Verfahren zum Konfigurieren einer IP-Adresse nach Anspruch 4, wobei das Verfahren vor dem Empfangen der Adressenkonfigurations-Strategiekonfliktinformationen, die durch das Endgerät berichtet werden, ferner Folgendes umfasst: Senden einer Adressenkonfigurationsnachricht zu dem Endgerät; und
Berichten der Informationen bezüglich des Fehlers an das Netzmanagementsystem in Übereinstimmung mit den Adressenkonfigurations-Strategiekonfliktinformationen, wenn die Adressenkonfigurations-Strategiekonfliktinformationen eine Präfixkonfliktfehlerkennung enthalten.

6. Verfahren zum Konfigurieren einer IP-Adresse nach Anspruch 4, wobei dann, wenn die Adressenkonfigurations-Strategiekonfliktinformationen keine Präfixkonfliktfehlerkennung enthalten, der Adressenkonfigurationsbefehl zu dem Endgerät in Übereinstimmung mit den Adressenkonfigurations-Strategiekonfliktinformationen gesendet wird.

7. Verfahren zum Konfigurieren einer IP-Adresse nach Anspruch 4, wobei das Senden des Adressenkonfigurationsbefehls zu dem Endgerät in Übereinstimmung mit den Adressenkonfigurations-Strategiekonfliktinformationen Folgendes umfasst:
Senden des Adressenkonfigurationsbefehls zu dem Endgerät über eine DHCP-Nachricht.

8. Verfahren zum Konfigurieren einer IP-Adresse nach Anspruch 4, wobei der Adressenkonfigurationsbefehl Folgendes umfasst: Auswählen einer zustandslosen Adressenkonfiguration oder Auswählen einer zustandshaltigen Adressenkonfiguration oder direktes Zuweisen einer neuen Adresse.

9. Vorrichtung zum Konfigurieren einer IP-Adresse, die Folgendes umfasst:
ein Nachrichtenempfangsmodul (41), das konfiguriert ist, eine Adressenkonfigurationsnachricht zu empfangen;
ein Konfliktberichtsmodul (42), das konfiguriert ist, dann, wenn ein Adressenkonfigurations-Strategiekonflikt auftritt, Adressenkonfigurations-Strategiekonfliktinformationen an eine Netzseite zu berichten, wobei die Adressenkonfigurations-Strategiekonfliktinformationen in einer Adressenkonfigurationskonflikt-Option, OPTION_IA_ReconfigConflict, einer DHCP-Nachricht enthalten sind; und
ein Befehlsempfangsmodul (43), das konfiguriert ist, einen Adressenkonfigurationsbefehl, der von der Netzseite geliefert wird, zu empfangen.

10. Vorrichtung zum Konfigurieren einer IP-Adresse, die Folgendes umfasst:
ein Konfliktempfangsmodul (61, 1010), das konfiguriert ist, Adressenkonfigurations-Strategiekonfliktinformationen, die durch ein Endgerät berichtet werden, zu empfangen, wobei die Adressenkonfigurations-Strategiekonfliktinformationen in einer Adressenkonfigurationskonflikt-Option, OPTION_IA_ReconfigConflict, einer DHCP-Nachricht enthalten sind; und
ein erstes Sendemodul (62, 1020), das konfiguriert ist, in Übereinstimmung mit den Adressenkonfigurations-Strategiekonfliktinformationen einen Adressenkonfigurationsbefehl zu dem Endgerät zu liefern oder Informationen bezüglich eines Fehlers an ein Netzmanagementsystem zu berichten.

11. Vorrichtung zum Konfigurieren einer IP-Adresse nach Anspruch 10, die ferner Folgendes umfasst:
ein zweites Sendemodul (1030), das konfiguriert ist, eine Adressenkonfigurationsnachricht zu dem Endgerät zu senden, wobei das erste Sendemodul Folgendes umfasst:
eine Bestimmungseinheit (1021), die konfiguriert ist, zu bestimmen, ob die Adressenkonfigurations-Strategiekonfliktinformationen eine Präfixkonfliktfehlerkennung enthalten;
eine Berichtseinheit (1022), die konfiguriert ist, dann, wenn die Bestimmungseinheit bestimmt, dass die Adressenkonfigurations-Strategiekonfliktinformationen die Präfixkonfliktfehlerkennung enthalten, Informationen bezüglich eines ernsthaften Konflikts an das Netzmanagementsystem in Übereinstimmung mit den Adressenkonfigurations-Strategiekonfliktinformationen zu berichten; und
eine Befehlssendeeinheit (1023), die konfiguriert ist, dann, wenn die Bestimmungseinheit bestimmt, dass die Adressenkonfigurations-Strategiekonfliktinformationen die Präfixkonfliktfehlerkennung nicht enthalten, den Adressenkonfigurationsbefehl zu dem Endgerät zu senden.

12. System zum Konfigurieren einer IP-Adresse, das ein Endgerät (1110) und eine Netzseite (1120) umfasst, wobei
das Endgerät konfiguriert ist, dann, wenn ein Adressenkonfigurations-Strategiekonflikt auftritt, Adressenkonfigurations-Strategiekonfliktinformationen an die Netzseite zu berichten, wobei die Adressenkonfigurations-Strategiekonfliktinformationen in einer Adressenkonfigurationskonflikt-Option, OPTION_IA_ReconfigConflict, einer DHCP-Nachricht enthalten sind; und
die Netzseite konfiguriert ist, in Übereinstimmung mit den Adressenkonfigurations-Strategiekonfliktinformationen einen Adressenkonfigurationsbefehl zu dem Endgerät zu liefern oder Informationen bezüglich eines Fehlers an ein Netzmanagementsystem zu berichten.

## Revendications

1. Procédé de configuration d'une adresse IP, comprenant :
la réception (301), par un terminal, d'un message de configuration d'adresse ;
quand un conflit de stratégie de configuration d'adresse se produit, le rapport (302), par le terminal, d'informations de conflit de stratégie de configuration d'adresse à un côté réseau ; et
la réception (303), par le terminal, d'une instruction de configuration d'adresse délivrée par le côté réseau ;
dans lequel le rapport des informations de conflit de stratégie de configuration d'adresse au côté réseau comprend :
le rapport des informations de conflit de stratégie de configuration d'adresse à un serveur DHCP par le biais d'un message DHCP ;
dans lequel les informations de conflit de stratégie de configuration d'adresse sont comprises dans une option de conflit de configuration d'adresse, OPTION_IA_ReconfigConflict, du message DHCP, et l'option de conflit de configuration d'adresse est utilisée pour transférer des informations de conflit de stratégie de configuration d'adresse d'un hôte.

2. Procédé de configuration d'une adresse IP selon la revendication 1, dans lequel le message DHCP est un message de renouvellement ou un message de demande d'informations.

3. Procédé de configuration d'une adresse IP selon l'une quelconque des revendications 1 à 2, dans lequel les informations de conflit de stratégie de configuration d'adresse comprennent un type de conflit et/ou un contenu de conflit.

4. Procédé de configuration d'une adresse IP, comprenant :
la réception (501), par un côté réseau, d'informations de conflit de stratégie de configuration d'adresse rapportées par un terminal, dans lequel les informations de conflit de stratégie de configuration d'adresse sont comprises dans une option de conflit de configuration d'adresse, OPTION_IA_ReconfigConflict, d'un message DHCP ; et
conformément aux informations de conflit de stratégie de configuration d'adresse, la délivrance (502), par le côté réseau, d'une instruction de configuration d'adresse au terminal, ou le rapport (502), par le côté réseau, d'informations relatives à une erreur à un système de gestion de réseau.

5. Procédé de configuration d'une adresse IP selon la revendication 4, le procédé comprenant en outre, avant la réception des informations de conflit de stratégie de configuration d'adresse rapportées par le terminal, l'envoi d'un message de configuration d'adresse au terminal ; et
le rapport des informations relatives à l'erreur au système de gestion de réseau conformément aux informations de conflit de stratégie de configuration d'adresse, quand les informations de conflit de stratégie de configuration d'adresse comprennent un identifiant d'erreur de conflit de préfixe.

6. Procédé de configuration d'une adresse IP selon la revendication 4, dans lequel quand les informations de conflit de stratégie de configuration d'adresse ne comprennent pas d'identifiant d'erreur de conflit de préfixe, l'instruction de configuration d'adresse est envoyée au terminal conformément aux informations de conflit de stratégie de configuration d'adresse.

7. Procédé de configuration d'une adresse IP selon la revendication 4, dans lequel l'envoi de l'instruction de configuration d'adresse au terminal conformément aux informations de conflit de stratégie de configuration d'adresse comprend :
l'envoi de l'instruction de configuration d'adresse au terminal par le biais d'un message DHCP.

8. Procédé de configuration d'une adresse IP selon la revendication 4, dans lequel l'instruction de configuration d'adresse comprend : la sélection d'une configuration d'adresse sans état, ou la sélection d'une configuration d'état avec état, ou l'allocation directe d'une nouvelle adresse.

9. Appareil de configuration d'une adresse IP, comprenant :
un module de réception de message (41), configuré pour recevoir un message de configuration d'adresse ;
un module de rapport de conflit (42), configuré pour, quand un conflit de stratégie de configuration d'adresse se produit, rapporter des informations de conflit de stratégie de configuration d'adresse à un côté réseau, dans lequel les informations de conflit de stratégie de configuration d'adresse sont comprises dans une option de conflit de configuration d'adresse, OPTION_IA_ReconfigConflict, d'un message DHCP ; et
un module de réception d'instruction (43), configuré pour recevoir une instruction de configuration d'adresse délivrée par le côté réseau.

10. Appareil de configuration d'une adresse IP comprenant :
un module de réception de conflit (61, 1010), configuré pour recevoir des informations de conflit de stratégie de configuration d'adresse rapportées par un terminal, dans lequel les informations de conflit de stratégie de configuration d'adresse sont comprises dans une option de conflit de configuration d'adresse, OPTION_IA_ReconfigConflict, d'un message DHCP ; et
un premier module d'envoi (62, 1020), configuré pour, conformément aux informations de conflit de stratégie de configuration d'adresse, délivrer une instruction de configuration d'adresse au terminal, ou rapporter des informations relatives à une erreur à un système de gestion de réseau.

11. Appareil de configuration d'une adresse IP selon la revendication 10, comprenant en outre :
un second module d'envoi (1030), configuré pour envoyer un message de configuration d'adresse au terminal, dans lequel
le premier module d'envoi comprend :
une unité de détermination (1021), configurée pour déterminer si les informations de conflit de stratégie de configuration d'adresse comprennent ou non un identifiant d'erreur de conflit de préfixe ;
une unité de rapport (1022), configurée pour, quand l'unité de détermination détermine que les informations de conflit de stratégie de configuration d'adresse comprennent l'identifiant d'erreur de conflit de préfixe, rapporter des informations de conflit grave au système de gestion de réseau conformément aux informations de conflit de stratégie de configuration d'adresse ; et
une unité d'envoi d'instruction (1023), configurée pour, quand l'unité de détermination détermine que les informations de conflit de stratégie de configuration d'adresse ne comprennent pas l'identifiant d'erreur de conflit de préfixe, envoyer l'instruction de configuration d'adresse au terminal.

12. Système de configuration d'une adresse IP, comprenant un terminal (1110) et un côté réseau (1120), dans lequel
le terminal est configuré pour, quand un conflit de stratégie de configuration d'adresse se produit, rapporter des informations de conflit de stratégie de configuration d'adresse au côté réseau, dans lequel les informations de conflit de stratégie de configuration d'adresse sont comprises dans une option de conflit de configuration d'adresse, OPTION_IA_ReconfigConflict, d'un message DHCP ; et
le côté réseau est configuré pour, conformément aux informations de conflit de stratégie de configuration d'adresse, délivrer une instruction de configuration d'adresse au terminal, ou rapporter des informations relatives à une erreur à un système de gestion de réseau.
